# EUROPEAN PATENT APPLICATION

(11) **EP 4 819 579 A1**
(43) Date of publication of application: **07.10.2026**
(21) Application number: 24899659.7
(22) Date of filing: 25.11.2024
(51) Int. Cl.: H04L 61/5014

(54) **SERVICE CONFIGURATION METHOD FOR IPV6 NETWORK, ELECTRONIC DEVICE AND READABLE STORAGE MEDIUM**

(30) Priority: 04.12.2023 CN 202311656724
(71) Applicant: ZTE CORPORATION, Shenzhen, Guangdong 518057 (CN)
(72) Inventor: SHEN, Hongli, Shenzhen, Guangdong 518057 (CN)
(74) Representative: Ziebig Hengelhaupt Intellectual Property Attorneys Patentanwaltskanzlei PartGmbB
(86) International application number: PCT/CN2024/134181
(87) International publication number: WO 2025/119018

(57) **Abstract**

The present application relates to the technical field of communications, and discloses a service configuration method for an IPv6 network, an electronic device and a readable storage medium. The method comprises: receiving an IPv6 address request message from a terminal device, wherein the IPv6 address request message comprises service type information; on the basis of the service type information, determining WAN connection information corresponding to the service type information, and obtaining target IPv6 address information; establishing a first mapping relationship between the target IPv6 address information and the WAN connection information, and sending the target IPv6 address information to the terminal device; and on the basis of the first mapping relationship, determining the WAN connection information mapped to the target IPv6 address information for forwarding a service message.

## Description

### CROSS-REFERENCE TO RELATED APPLICATIONS

The present application claims priority to the Chinese patent application No. 202311656724.7 filed to the CNIPA on December 4, 2023, and entitled "SERVICE CONFIGURATION METHOD FOR IPV6 NETWORK, ELECTRONIC DEVICE AND READABLE STORAGE MEDIUM", the entire content of which is incorporated herein by reference.

### TECHNICAL FIELD

The present application relates to the technical field of communications, in particular to a service configuration method for an IPv6 network, an electronic device and a readable storage medium.

### BACKGROUND

With the rapid development of the Internet, Internet Protocol version 6 (IPv6) technology has become increasingly mature, and a growing number of access networks and devices support IPv6. By leveraging the computer's network environment, various household electrical appliances inside the home are interconnected with the Internet, enriching the enjoyment of home life through the network, making it diversified, intelligent, and personalized, while ensuring secure and reliable services. Internet Protocol Television (IPTV) Set Top Boxes (STBs), XBOX (a home video game console) and the like have now become essential entertainment equipment for most households. At present, most network environments use Internet Protocol version 4 (IPv4). However, IPv6 has an enormous address capacity, which is particularly important for network management, making the network environments using IPv6 an inevitable trend.

In an IPv6 network environment, service requirements of devices connected to a home gateway differ. Failure to configure corresponding rules for distinguishing terminal services will lead to issues such as service interruption for terminals and network congestion. For example, non-IPTV devices may access massive on-demand resources and video services, but this is not what operators of various websites carrying IPTV services wish to see. At the same time, traffic data of non-IPTV services traversing the IPTV network will also increase network congestion and transmission delay, resulting in poor user experience.

In the IPv6 network environment, the types of terminal devices are diverse, and corresponding service scenario requirements are also varied. How to dynamically identify terminal service requirements to perform adaptive service configuration, so that terminals with different service requirements can access the Internet safely and efficiently, has become an urgent problem to be solved.

### SUMMARY

A main object of the present application is to provide a service configuration method for an IPv6 network, an electronic device and a readable storage medium.

To implement the above object, the present application provides a service configuration method for an IPv6 network, including: receiving an IPv6 address request message from a terminal device, wherein the IPv6 address request message includes service type information; determining, according to the service type information, WAN connection information corresponding to the service type information, and acquiring target IPv6 address information; establishing a first mapping relationship between the target IPv6 address information and the WAN connection information, and sending the target IPv6 address information to the terminal device; and determining, after receiving a service message carrying the target IPv6 address information returned by the terminal device, the WAN connection information mapped by the target IPv6 address information according to the first mapping relationship for forwarding the service message.

In addition, to implement the above object, the present application further provides an electronic device. The electronic device includes: a memory, a processor and a service configuration program for an IPv6 network stored on the memory and capable of running on the processor, wherein the service configuration program for the IPv6 network, when executed by the processor, implements the above-mentioned service configuration method for the IPv6 network.

In addition, to implement the above object, the present application further provides a readable storage medium. The readable storage medium is a computer-readable storage medium. The computer-readable storage medium stores a service configuration program for an IPv6 network thereon, and the service configuration program for the IPv6 network, when executed by a processor, implements the above-mentioned service configuration method for the IPv6 network.

### BRIEF DESCRIPTION OF DRAWING(S)

To illustrate the technical solutions in embodiments of the present application or in the prior art more clearly, the accompanying drawings required for describing the embodiments or the prior art are briefly introduced below. Apparently, the accompanying drawings in the following descriptions only show some embodiments of the present application, and a person of ordinary skill in the art can still derive other accompanying drawings from structures shown in these accompanying drawings without creative efforts.
FIG. 1 is a schematic structural diagram of a communication system provided by an embodiment of the present application.
FIG. 2 is a schematic flowchart of a first embodiment of a service configuration method for an IPv6 network of the present application.
FIG. 3 is a schematic diagram of a service configuration framework in an embodiment of the present application.
FIG. 4 is a sequence diagram of service configuration in an embodiment of the present application.
FIG. 5 is a schematic flowchart of a terminal identification module in an embodiment of the present application.
FIG. 6 is a schematic flowchart of a WAN port control module in an embodiment of the present application.
FIG. 7 is a schematic flowchart of a service configuration control module in an embodiment of the present application.
FIG. 8 is a schematic diagram of service control forwarding in an embodiment of the present application.
FIG. 9 is a schematic diagram of a hardware structure of an electronic device involved in a solution of an embodiment of the present application.

The objective implementation, function features and advantages of the present application will be further described in combination with embodiments and with reference to the accompanying drawings.

### DETAILED DESCRIPTION

It is to be understood that the specific embodiments described here are only used for explaining the present application, instead of limiting the present application.

Technical solutions in embodiments of the present application will be clearly and completely described below in conjunction with the accompanying drawings in the embodiments of the present application. Apparently, the described embodiments are only part of the embodiments of the present application, not all of them. Based on the embodiments in the present application, all other embodiments obtained by those of ordinary skills in the art without creative effort fall within the scope of protection of the present application.

It is to be noted that, all directional indications (such as upper, lower, left, right, front and back) in the embodiments of the present application are only used to explain a relative position relationship and motions of components in a specific posture (as shown in the accompanying drawings). If the specific posture changes, the directional indications also change accordingly.

In the present application, unless otherwise clearly specified and defined, the terms such as "connection" and "fixation" should be understood in a broad sense. For example, "fixation" may be fixed connection, detachable connection, or integration; may be mechanical connection or electrical connection; or may be direct connection, indirect connection through an intermediate medium, or communication of the interiors of two elements or the relationship of interaction between two elements, unless otherwise clearly defined. To those of ordinarily skills in the art, the specific meanings of the above terms in the present application may be understood according to specific circumstances.

In addition, the descriptions such as "first" and "second" involved in the present application are only for descriptive purposes and cannot be understood as indicating or implying their relative importance or implicitly specifying the quantity of technical features indicated. Therefore, features that are defined by "first" and "second" can explicitly or implicitly include at least one of these features. In addition, technical solutions between various embodiments may be combined with each other, but on the basis that they must be implemented by those of ordinary skills in the art. When the combination of the technical solutions is contradictory or impossible to achieve, it should be considered that such combination of the technical solutions does not exist and is not within the scope of protection required by the present application.

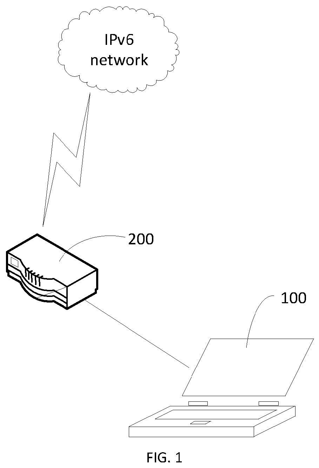

Referring to FIG. 1, a communication system includes a terminal device 100 and an access network device 200.

The terminal device 100 refers to various electronic devices that need to access the Internet (i.e., connected to an IPv6 public network). Examples include computers, notebook computers, smart phones, tablet computers, smart wearable devices, and other similar devices, or other household devices as well. The terminal device may be connected to a routing device via wired or wireless means, thereby communicating with the IPv6 public network. In an embodiment of the present application, terminal devices may be classified into multiple types based on different operating systems installed therein. For instance, terminal devices installed with the Android operating system may be one type of terminal devices, terminal devices installed with Windows 7 may be another type of terminal devices, and terminal devices installed with iOS may also be another type of terminal devices. Certainly, the embodiment of the present application does not impose specific limitations on the types of the operating systems installed in the terminal devices. A terminal device may also have the Windows 10 operating system installed, or other operating systems such as those derived from native Android. However, regardless of the type of the operating systems installed in the terminal device, its level of IPv6 support may generally be summarized into three categories: first, supporting acquiring an IPv6 address through a dynamic host configuration protocol for IPv6 (DHCPv6); second, supporting acquiring an IPv6 address through IPv6 stateless auto-configuration, i.e., via router advertisement (RA); and third, supporting both acquiring an IPv6 address through DHCPv6 and acquiring an IPv6 address through IPv6 stateless auto-configuration.

The access network device 200 is an executing subject of a service configuration method for an IPv6 network in an embodiment of the present application. The access network device 200 is a routing device or home gateway that supports an IPv6 protocol stack. The access network device includes a local area network port for connecting to terminal devices and a wide area network port for connecting to a gateway, and correspondingly communicates with the terminal devices through the local area network port and with the IPv6 network through the wide area network port. In the embodiment of the present application, the access network device may be configured to centrally manage terminal devices and has a function of DHCPv6. For example, when a terminal device acquires an IPv6 address through DHCPv6, the access network device may act as a server side of a DHCPv6 protocol, provide DHCPv6 services, and configure the IPv6 address for the terminal device. At the moment, the terminal device exists as a client side of the DHCPv6 protocol. For another example, when a terminal device acquires an IPv6 address through IPv6 stateless auto-configuration, the access network device may allocate prefix information (prefix) to the terminal device through an RA message, so that the terminal device generates a unicast IPv6 address using a random algorithm according to the prefix information and its own interface information. Generally, the terminal device's own interface information may be determined based on a media access control (MAC) address of the terminal device.

It is to be noted that, although only one terminal device 100 is shown in FIG. 1, it should be understood that the communication system may include one or more terminal devices, and the access network device 200 may be connected to the respective terminal devices through different local area network ports respectively, which is not specifically limited in the present application. Similarly, the communication system may also include a plurality of access network devices, which is likewise not limited. In a possible implementation, the access network device may be customer premises equipment (CPE) or a wireless access point (AP), used to enable various types of terminal devices to access the network.

In an IPv6 network environment, service requirements of devices connected to a home gateway differ. Failure to configure corresponding rules for distinguishing terminal services will lead to issues such as service interruption for terminals and network congestion. For example, non-IPTV devices may access massive on-demand resources and video services, but this is not what operators of various websites carrying IPTV services wish to see. At the same time, traffic data of non-IPTV services traversing the IPTV network will also increase network congestion and transmission delay, resulting in poor user experience.

Currently, there are related technologies for allocating IPv6 addresses to different types of devices. However, it is particularly important to bridge service requirements of devices with service types of routing gateways, thereby enabling intelligent identification of device service requirements and adaptive configuration of IPv6 network services, so as to ensure network security, guarantee service reliability, and provide better user experience and transmission efficiency. In the IPv6 network environment, the configuration for different service scenarios, including but not limited to security issues such as forwarding domain name query requests and traffic data, has not yet been effectively resolved.

In the IPv6 network environment, the configuration for different service scenarios, including but not limited to security issues such as forwarding domain name query requests and traffic data, has not yet been effectively resolved.

In the IPv6 network environment, the types of terminal devices are diverse, and corresponding service scenario requirements are also varied. How to dynamically identify terminal service requirements to perform adaptive service configuration, so that terminals with different service requirements can access the Internet safely and efficiently, has become an urgent problem to be solved.

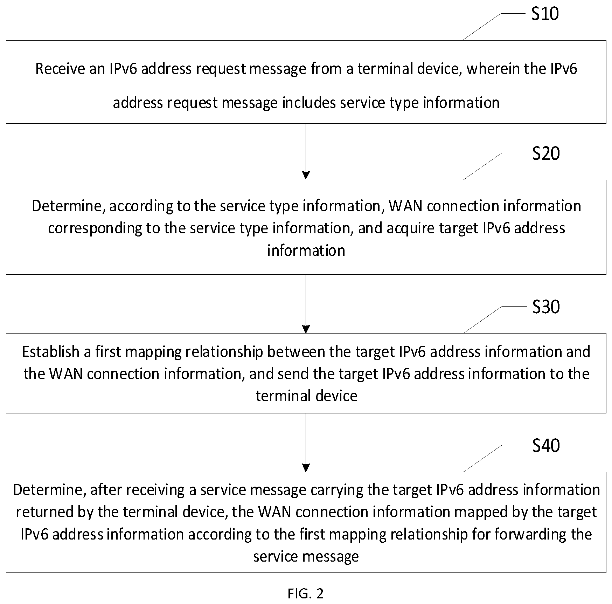

Based on this, for connected devices with different service types, an embodiment of the present application can provide an adaptive service configuration method for an IPv6 network. Based on this, an embodiment of the present application provides a service configuration method for an IPv6 network. Referring to FIG. 2, FIG. 2 is a schematic flowchart of a first embodiment of the service configuration method for the IPv6 network of the present application. In this embodiment, the service configuration method for the IPv6 network includes the following steps.

Step S10: an IPv6 address request message from a terminal device is received, wherein the IPv6 address request message includes service type information.

In this embodiment, an access network device may obtain the service type information included in the IPv6 address request message by receiving the IPv6 address request message from the terminal device. In addition, the IPv6 address request message sent by the above terminal device may be a router solicitation message, namely, an RS message. Here, device type indication information included in the RS message may be a media access control (MAC) address (which may also be referred to as a local area network address, an Ethernet address, a physical address or a hardware address) of the terminal device sending the RS message. It is to be understood that, the MAC address may be used to uniquely identify one network card in a network. If one terminal device has one or more network cards, then each network card needs and will have a unique MAC address.

The service type information is used to represent a service type of the terminal device.

Step S20: according to the service type information, wide area network (WAN) connection information corresponding to the service type information is determined, and target IPv6 address information is acquired.

The WAN connection information may include information such as an IPv6 domain name system (DNS) address connected to a WAN. For example, it may include a link-local address (LLA) or a global unicast address (GUA), which is not specifically limited in this embodiment.

In this embodiment, the service type information of the terminal device and the WAN connection information have a one-to-one mapping relationship, and different pieces of WAN connection information are usually mapped to different pieces of service type information. For example, if service type information embodied by a service type identification is "Internet protocol television (IPTV)", it indicates that the terminal device may be a set top box (STB) device and needs to access service networks related to IPTV. At the moment, the mapped WAN connection information is first WAN connection information. If the service type identification is "IPTV+Internet," it indicates that the terminal is a smart device with requirements for both IPTV and Internet access services. At the moment, the mapped WAN connection information is second WAN connection information. Thus, adaptive service configuration is performed by dynamically identifying the service type of the terminal device, so that terminals with different service requirements can access the Internet securely and efficiently.

The mapping relationship may be pre-stored in a system of the access network device and may be dynamically configured or dynamically updated, which is not specifically limited in this embodiment. Therefore, this embodiment may determine the WAN connection information corresponding to the service type information based on the mapping relationship.

It is apparent to those skilled in the art that the target IPv6 address information may be acquired through one of the following ways: the target IPv6 address information is acquired via DHCPv6; and the target IPv6 address information is acquired via IPv6 stateless auto-configuration.

In some feasible implementations, the access network device may obtain the service type information included in the IPv6 address request message by receiving the IPv6 address request message from the terminal device. Specifically, the IPv6 address request message sent by the above terminal device may be a dynamic host configuration protocol for IPv6 (DHCPv6) solicit message, namely a DHCPv6 solicit message. When the terminal device generates the DHCPv6 solicit message, by acquiring the service type information of the terminal device, the service type information may be written into designated fields such as a second field or a third field of the DHCPv6 solicit message. It is to be understood that, the second field here may be an Option16 field in the DHCPv6 solicit message, the third field may be an RS Option field, and the service type information may be a type identification for identifying the service type of the terminal device sending the DHCPv6 solicit message filled within the Option16 field or the RS Option field (i.e., a router solicitation option field). For example, the type identification may be a first type identification, a second type identification and the like, which is not limited here. Here, various type identifications may be a character string composed of numbers, letters or symbols, and one type identification is used to uniquely identify one service type. In other words, the terminal device and the access network device may make an agreement about the meanings represented by the service type information written into the second field or the third field in advance. For example, when the first type identification is written into the second field or the third field by the terminal device as the service type information, a first service type corresponding to the first type identification may be set; and when the second type identification is written into the second field or the third field by the terminal device as the service type information, a second service type corresponding to the second type identification may be set. Alternatively, when the first type identification is written into the second field or the third field by the terminal device as the service type information, a second service type corresponding to the first type identification may also be set; and when the second type identification is written into the second field or the third field by the terminal device as the service type information, a first service type corresponding to the second type identification may also be set, which are not limited here.

In some feasible implementations, upon determining the service type of the terminal device, the access network device can determine the target IPv6 address information of the terminal device according to the service type. Here, the target IPv6 address information may be a target IPv6 proxy prefix or a target IPv6 address generated based on the above target IPv6 proxy prefix. It is to be understood that, IPv6 address information corresponding to terminal devices of different device types includes different IPv6 proxy prefixes. For example, assuming that a service type corresponding to a terminal device 1 is a service type 1 and a service type corresponding to a terminal device 2 is a service type 2, then an IPv6 proxy prefix corresponding to the service type 1 may be an IPv6 proxy prefix 1, and an IPv6 proxy prefix corresponding to the service type 2 may be an IPv6 proxy prefix 2.

It is to be noted that, a complete IPv6 address has an address length of 128 bits, including a 64-bit proxy prefix and a 64-bit host address. In the embodiment of the present application, if the access network device employs stateless address auto-configuration, then the target IPv6 address information is the target IPv6 proxy prefix; and if the access network device employs stateful address auto-configuration, then the target IPv6 address information is the target IPv6 address.

Specifically, when stateless address auto-configuration is employed, the access network device may send the target IPv6 proxy prefix corresponding to the service type to the above terminal device, and then the terminal device generates the complete target IPv6 address according to the received target IPv6 proxy prefix. For example, the terminal device may generate the target IPv6 address according to the received target IPv6 proxy prefix and its own MAC address. When stateful address auto-configuration is employed, the access network device may set a corresponding address pool for each service type in advance, wherein upon determining a service type of a certain terminal device, the address pool from which an address should be allocated can be determined according to the service type. It is not difficult to understand that the above address pool is a collection of a plurality of IPv6 addresses, or in other words, an address range. A certain address pool includes a plurality of addresses derived from a certain proxy prefix, that is, one address pool includes a plurality of complete addresses having the same proxy prefix. Specifically, when an address is allocated from an address pool to the terminal device, an idle IPv6 address (i.e., an unallocated IPv6 address) may be found from the address pool as the target IPv6 address, and then sent to the corresponding terminal device mentioned above. Alternatively, the address allocation method may also be determined according to actual application scenarios, which is not limited here. In practical applications, if the access network device is customer premises equipment (CPE), the stateless address auto-configuration of the CPE may be implemented by RA daemon in the CPE, and the stateful address auto-configuration of the CPE may be implemented by DHCPv6 in the CPE.

Step S30: a first mapping relationship between the target IPv6 address information and the WAN connection information is established, and the target IPv6 address information is sent to the terminal device.

In this embodiment, by establishing the first mapping relationship between the target IPv6 address information and the WAN connection information and sending the target IPv6 address information to the terminal device, after a service message carrying the target IPv6 address information returned by the terminal device is received, the WAN connection information mapped by the target IPv6 address information can be conveniently determined subsequently according to the first mapping relationship, and the service message is forwarded according to the mapped WAN connection information. Therefore, even in an IPv6 network environment where the service types of terminals are diverse and the corresponding service scenario requirements are also varied, the embodiment of the present application further bridges the service requirements of the terminal device with service types of routing gateways, thereby achieving intelligent identification of device service requirements and adaptive configuration of IPv6 network services, so as to ensure network security, guarantee service reliability, and provide better user experience.

Step S40: after the service message carrying the target IPv6 address information returned by the terminal device is received, the WAN connection information mapped by the target IPv6 address information is determined according to the first mapping relationship for forwarding the service message.

Exemplarily, the target IPv6 address information is a target IPv6 proxy prefix or an IPv6 global unicast address (GUA) generated based on the target IPv6 proxy prefix.

It is to be noted that, although there are related technologies currently for allocating IPv6 addresses to different types of terminal devices, how to bridge service requirements of devices with service types of routing gateways, thereby enabling intelligent identification of device service requirements is still a problem urgent to be solved.

Based on this, the present application provides the service configuration method for the IPv6 network, an electronic device and a readable storage medium. In the service configuration method for the IPv6 network, an adaptive service configuration method for the IPv6 network is provided for accessed devices with different service types. The technical solution of the embodiment of the present application is as follows: the IPv6 address request message from the terminal device is received, wherein the IPv6 address request message includes the service type information; according to the service type information, the WAN connection information corresponding to the service type information is determined, and the target IPv6 address information is acquired; the first mapping relationship between the target IPv6 address information and the WAN connection information is established, and the target IPv6 address information is sent to the terminal device; and after receiving the service message carrying the target IPv6 address information returned by the terminal device is received, the WAN connection information mapped by the target IPv6 address information is determined according to the first mapping relationship for forwarding the service message. Therefore, by identifying the terminal service type in the IPv6 network environment, the specific service of its query message is realized, thereby ensuring network security and making up for the implementation of adaptive service configuration for different device service types in the IPv6 network environment. This ensures the network security and service reliability of service implementation for terminal devices with different service types or multiple service type requirements in the IPv6 network environment, and further solves the technical problem of how to dynamically identify the terminal service requirements to perform adaptive service configuration, so that terminals with different service requirements can access the Internet securely and efficiently.

The embodiment of the present application provides the method for adaptive service configuration based on different service requirements in the IPv6 network environment, aiming at the problem that services cannot be intelligently and securely configured according to the different service requirements of devices connected to a home gateway in the IPv6 network environment. This method is applicable to IPv6 network devices.

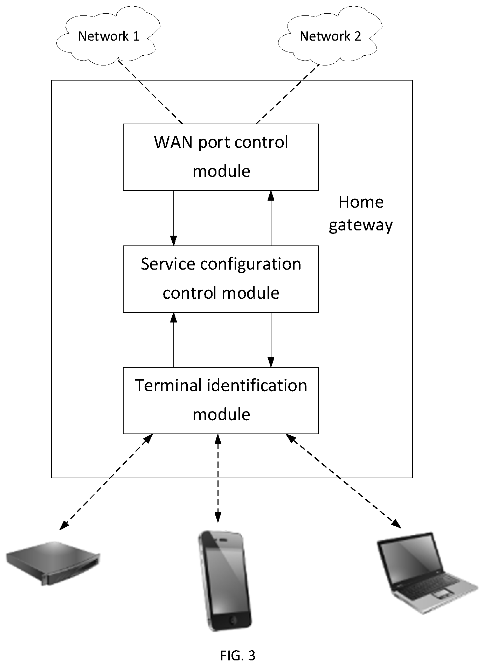

Further, to help understand the technical conception of the embodiment of the present application, a specific embodiment is listed. Referring to FIG. 3, FIG. 3 is a schematic diagram of a service configuration framework in an embodiment of the present application. In this embodiment, the access network device is a home gateway. The embodiment of the present application includes the following components or modules: 1, a terminal identification module, mainly configured to identify a service type of an accessed terminal device; 2, a service configuration control module, mainly configured to configure relevant services to the terminal device and control service data of local area network (LAN) port devices and wide area network (WAN) port messages; and 3, a WAN port control module, mainly configured to maintain relevant service indexes of WAN ports of the gateway.

This embodiment realizes the service of specific query messages by respectively identifying the terminal service types in an IPv6 network environment, thereby ensuring network security, and describes the configuration and control of terminal services in the IPv6 network environment and how the services are implemented, making up for the implementation of adaptive service configuration for different device service types in the IPv6 network environment.

It is to be noted that the above specific embodiment is only used to help understand the technical conception of the embodiment of the present application and does not constitute a limitation on the present application. Simple transformations in more forms based on this technical conception shall all fall within the scope of protection of the present application.

In a possible implementation, the WAN connection information includes an identification value of a target WAN port corresponding to the service type information, and determining the WAN connection information mapped by the target IPv6 address information for forwarding the service message includes the following steps: step A10, generating a destination forwarding route entry according to the identification value of the target WAN port mapped by the target IPv6 address information; and step A20, forwarding the service message to a target GUA corresponding to the target WAN port through the destination forwarding route entry.

Different WAN ports usually correspond to different target GUAs, and therefore, specifically, the target WAN port may be positioned based on the identification value of the target WAN port (different identification values correspond to different WAN ports), and connection configuration information corresponding to the target WAN port is acquired according to the positioned target WAN port, so that the service message can be conveniently forwarded to the target GUA corresponding to the target WAN port according to the connection configuration information. The connection configuration information may include IPv6 DNS server information and the like, such as a link-local address (LLA) or a global unicast address (GUA), which is not limited in this embodiment.

In this embodiment, the destination forwarding route entry is generated according to the identification value of the target WAN port mapped by the target IPv6 address information, and the service message is forwarded to the target GUA corresponding to the target WAN port through the destination forwarding route entry. Therefore, adaptive service configuration is accurately performed based on the service type of the terminal device, which makes up for the implementation of adaptive service configuration for different device service types in the IPv6 network environment, thereby ensuring the network security and service reliability of service implementation for terminal devices with different service types or multiple service type requirements in the IPv6 network environment.

In a possible implementation, the method further includes: step B10, dynamically detecting a connectivity status of the terminal device, wherein the connectivity status includes an online state and an offline state; and step B20, dynamically maintaining the first mapping relationship according to the dynamically detected connectivity status.

In this embodiment, specifically, when the connectivity status of the terminal device is the offline state, information of the terminal device may be deleted from the first mapping relationship or disabled, whereas when the connectivity status of the terminal device is the online state, the information of the terminal device is restored from the first mapping relationship or enabled.

In this embodiment, the connectivity status of the terminal device is dynamically detected (wherein the connectivity status includes the online state and the offline state), and the first mapping relationship is dynamically maintained according to the dynamically detected connectivity status. Therefore, the network security and service reliability of service implementation for terminal devices with different service types or multiple service type requirements in the IPv6 network environment are ensured.

In a possible implementation, the method further includes: step C10, dynamically detecting a communication status of the target WAN port, wherein the communication status includes a connected state and a disconnected state; and step C20, dynamically maintaining the first mapping relationship according to the dynamically detected communication status.

In this embodiment, specifically, when the communication status of the target WAN port is the disconnected state, information of the target WAN port is deleted from the first mapping relationship or disabled, whereas when the communication status of the target WAN port is the connected state, the information of the target WAN port is restored from the first mapping relationship or enabled.

In this embodiment, the communication status of the target WAN port is dynamically detected (wherein the communication status includes the connected state and the disconnected state), and the first mapping relationship is dynamically maintained according to the dynamically detected communication status. Therefore, the network security and service reliability of service implementation for terminal devices with different service types or multiple service type requirements in the IPv6 network environment are further ensured.

Further, to help understand the technical principle of the embodiment of the present application, a specific embodiment is listed, including the following technical solution employed in this embodiment. When an IPv6 terminal device accesses the network and acquires an IPv6 address from a home gateway device (the home gateway device is an instance of the access network device), the terminal device carries a service type of the device through an Option16 field in a DHCPv6 message or an RS Option field in an RS message. When the device requests to acquire the IPv6 address, WAN port information of a corresponding service in the home gateway is searched according to its different service types, and a requested global unique address and/or a proxy prefix are/is replied to the IPv6 terminal device. The home gateway device binds the IPv6 address of the terminal device to a WAN port of the corresponding service type, and generates a corresponding domain name forwarding rule file based on IPv6 DNS Server information on the WAN port and the IPv6 address of the terminal device, thereby realizing the binding of domain name specific services; and the home gateway device configures the IPv6 address of the terminal device and a forwarding rule entry corresponding to the WAN port into the kernel, thereby realizing the forwarding binding of data service messages. For online and offline events of IPv6 terminal access devices, as well as the connection and disconnection of the home gateway WAN port, dynamic maintenance is performed to update a relationship table, thereby ensuring the network security and service reliability of service implementation for terminal devices with different service types or multiple service type requirements in the IPv6 network environment.

This embodiment provides the adaptive service configuration method in the IPv6 network environment, aiming at the problems of network security, transmission efficiency, and diversity of service requirements existing in services for different IPv6 addresses allocated to different access devices.

It is to be noted that the above specific embodiment is only used to help understand the technical conception of the embodiment of the present application and does not constitute a limitation on the present application. Simple transformations in more forms based on this technical conception shall all fall within the scope of protection of the present application.

In an implementation, the method further includes the following steps.

Step D10: a link-local address of the terminal device is determined according to the IPv6 address request message.

In this embodiment, the link-local address is the LLA. The IPv6 address request message carries information of the LLA.

Step D20: a second mapping relationship between the link-local address and the WAN connection information is established.

In this embodiment, by establishing the second mapping relationship between the link-local address and the WAN connection information, after a service message carrying the link-local address returned by the terminal device is received, the WAN connection information mapped by the link-local address can be conveniently determined subsequently according to the second mapping relationship, and the service message is forwarded according to the mapped WAN connection information. Therefore, even in an IPv6 network environment where the service types of terminals are diverse and the corresponding service scenario requirements are also varied, the embodiment of the present application further bridges the service requirements of the device with service types of routing gateways, thereby achieving intelligent identification of device service requirements and adaptive configuration of IPv6 network services, so as to ensure network security, guarantee service reliability, and provide better user experience.

Step D30: after the service message carrying the link-local address returned by the terminal device is received, the WAN connection information mapped by the link-local address is determined according to the second mapping relationship.

Step D40: the service message is forwarded based on the WAN connection information mapped by the link-local address.

In the embodiment of the present application, after the IPv6 address request message from the terminal device is received, the link-local address of the terminal device is determined according to the IPv6 address request message, and the second mapping relationship between the link-local address and the WAN connection information is established. After the service message carrying the link-local address returned by the terminal device is received, the WAN connection information mapped by the link-local address is determined according to the second mapping relationship, and then the service message is forwarded based on the WAN connection information mapped by the link-local address. Therefore, by identifying the terminal service type in the IPv6 network environment, the specific service of its query message is realized, thereby ensuring network security and making up for the implementation of adaptive service configuration for different device service types in the IPv6 network environment. This ensures the network security and service reliability of service implementation for terminal devices with different service types or multiple service type requirements in the IPv6 network environment, and further solves the technical problem of how to dynamically identify the terminal service requirements to perform adaptive service configuration.

The embodiment of the present application provides the method for adaptive service configuration based on different service requirements in the IPv6 network environment, aiming at the problem that services cannot be intelligently and securely configured according to the different service requirements of devices connected to a home gateway in the IPv6 network environment. This method is applicable to IPv6 network devices.

Further, as an implementation, the WAN connection information includes IPv6 DNS server information of a target WAN port corresponding to the service type information, and forwarding the service message based on the WAN connection information mapped by the link-local address includes the following steps: step E10, generating a destination domain name forwarding rule according to the IPv6 DNS server information of the target WAN port mapped by the target IPv6 address information; and step E20, forwarding the service message to a target GUA corresponding to the target WAN port through the destination domain name forwarding rule.

In this embodiment, different WAN ports usually correspond to different pieces of IPv6 DNS server information, and therefore, specifically, the IPv6 DNS server information corresponding to the target WAN port may be acquired according to the target WAN port, so that the service message can be conveniently forwarded to the target GUA corresponding to the target WAN port according to the IPv6 DNS server information. The IPv6 DNS server information may be, for example, a global unicast address (GUA).

In this embodiment, the destination domain name forwarding rule is generated according to the IPv6 DNS server information of the target WAN port mapped by the target IPv6 address information, and the service message is forwarded to the target GUA corresponding to the target WAN port through the destination domain name forwarding rule. Therefore, adaptive service configuration is accurately performed based on the service type of the terminal device, which makes up for the implementation of adaptive service configuration for different device service types in the IPv6 network environment, thereby ensuring the network security and service reliability of service implementation for terminal devices with different service types or multiple service type requirements in the IPv6 network environment.

As an implementation, the method further includes: step F10, dynamically detecting a connectivity status of the terminal device, wherein the connectivity status includes an online state and an offline state; and step F20, dynamically maintaining the second mapping relationship according to the dynamically detected connectivity status.

In this embodiment, specifically, when the connectivity status of the terminal device is the offline state, relevant information of the terminal device is deleted from the second mapping relationship or disabled, whereas when the connectivity status of the terminal device is the online state, the relevant information of the terminal device is restored from the second mapping relationship or enabled.

In this embodiment, the connectivity status of the terminal device is dynamically detected (wherein the connectivity status includes the online state and the offline state), and the second mapping relationship is dynamically maintained according to the dynamically detected connectivity status. Therefore, the network security and service reliability of service implementation for terminal devices with different service types or multiple service type requirements in the IPv6 network environment are ensured.

As an implementation, the method further includes: step G10, dynamically detecting a communication status of the target WAN port, wherein the communication status includes a connected state and a disconnected state; and step G20, dynamically maintaining the second mapping relationship according to the dynamically detected communication status.

In this embodiment, specifically, when the communication status of the target WAN port is the disconnected state, relevant information of the target WAN port is deleted from the second mapping relationship or disabled, whereas when the communication status of the target WAN port is the connected state, the relevant information of the target WAN port is restored from the second mapping relationship or enabled.

In this embodiment, the communication status of the target WAN port is dynamically detected (wherein the communication status includes the connected state and the disconnected state), and the second mapping relationship is dynamically maintained according to the dynamically detected communication status. Therefore, the network security and service reliability of service implementation for terminal devices with different service types or multiple service type requirements in the IPv6 network environment are further ensured.

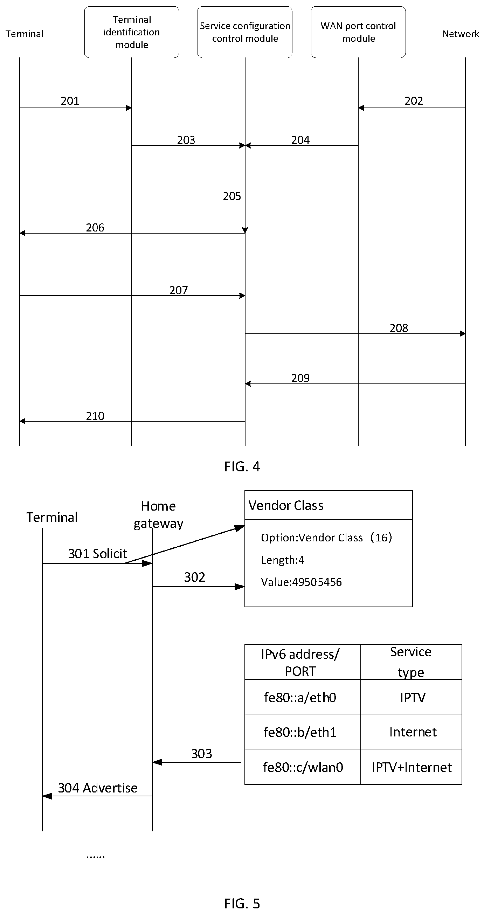

Further, to help understand the technical conception of the embodiment of the present application, a specific embodiment is listed. Referring to FIG. 4, FIG. 4 is a sequence diagram of service configuration in an embodiment of the present application. Service configuration includes the following steps.

Step 201: a terminal device is connected to an IPv6 network environment, a stateless address acquisition method or a stateful address acquisition method is initiated, a message carries service type information required by the terminal device, and a terminal identification module identifies a current service type; and a relationship table (i.e., a second mapping relationship) for a link-local address of the terminal device and the service type is generated.

Step 202: network services of respective WAN ports in a home gateway start to come online, a WAN port control module generates a relationship table between WAN connection information and service types according to their service types (i.e., according to the service type information, the WAN connection information corresponding to the service type information is determined).

Step 203: a service configuration control module starts to process an IPv6 address acquiring interaction message sent by the terminal device, and acquires the WAN connection information of the corresponding service types according to the relationship table in step 202.

Step 204: after receiving a query, the WAN port control module queries WAN connection configuration information (i.e., the above WAN connection information) of the corresponding service types, and generates a global unique address (GUA) and/or a proxy prefix requested by the accessed terminal device.

Step 205: the service configuration control module performs mapping on the relationship tables generated in step 201 and step 202, and configures an IPv6 DNS domain name forwarding rule file of the terminal device; and generates a corresponding forwarding configuration rule against the IPv6 link-local address of the terminal and WAN ports for the corresponding service types.

Step 206: the terminal device receives the IPv6 global unique address (GUA) and/or the proxy prefix via a response message of the home gateway, thereby completing address configuration.

Step 207: the terminal device begins corresponding services in an IPv6 network, and sends a message to the service configuration control module.

Step 208: the service configuration control module queries a forwarding route entry or the DNS domain name forwarding rule file for a specific service according to the IPv6 address of the terminal device, and sends the same to a corresponding service network from a WAN port of the corresponding IPv6 type.

Step 209: a downlink service message is connected to the service configuration control module via the WAN of the IPv6 type.

Step 210: the service configuration control module queries the configured service, and then forwards the downlink service message to the corresponding terminal device, thereby realizing different services of the terminal in the IPv6 network.

It is to be noted that the above specific embodiment is only used to help understand the technical conception of the embodiment of the present application and does not constitute a limitation on the present application. Simple transformations in more forms based on this technical conception shall all fall within the scope of protection of the present application.

In a possible implementation, the method further includes the following steps.

Step H10: a local area network (LAN)-side port number accessed by the terminal device is determined according to the IPv6 address request message.

The IPv6 address request message carries information of the LAN-side port number.

Step H20: a third mapping relationship between the LAN-side port number and the WAN connection information is established.

In this embodiment, by establishing the third mapping relationship between the LAN-side port number and the WAN connection information, after a service message sent by the terminal device based on the LAN-side port number is received, the WAN connection information mapped by the LAN-side port number can be conveniently determined subsequently according to the third mapping relationship, and the service message is forwarded according to the mapped WAN connection information. Therefore, even in the IPv6 network environment where the service types of the terminal device are diverse and the corresponding service scenario requirements are also varied, the embodiment of the present application further bridges the service requirements of the terminal device with service types of routing gateways, thereby achieving intelligent identification of device service requirements and adaptive configuration of IPv6 network services, so as to ensure network security, guarantee service reliability, and provide better user experience.

Step H30: after the service message sent by the terminal device based on the LAN-side port number is received, the WAN connection information mapped by the LAN-side port number is determined according to the third mapping relationship.

Step H40: the service message is forwarded based on the WAN connection information mapped by the LAN-side port number.

Exemplarily, the WAN connection information includes a port number of a target WAN port corresponding to the service type information, and forwarding the service message based on the WAN connection information mapped by the LAN-side port number includes the following step: step I10, forwarding the service message to a service network corresponding to the target WAN port according to the port number of the target WAN port mapped by the LAN-side port number.

In the embodiment of the present application, after the IPv6 address request message from the terminal device is received, the LAN-side port number accessed by the terminal device is determined according to the IPv6 address request message, and the third mapping relationship between the LAN-side port number and the WAN connection information is established; after the service message sent by the terminal device based on the LAN-side port number is received, the WAN connection information mapped by the LAN-side port number is determined according to the third mapping relationship; and then the service message is forwarded based on the WAN connection information mapped by the LAN-side port number. Therefore, the embodiment of the present application can not only perform service binding according to the IPv6 address of the terminal device, but also perform service binding by identifying the LAN-side port number corresponding to the terminal device. That is, after the device type under the port is identified, specific port service binding is performed on that port, so that all devices under that port can go out through the designated service WAN port, thereby realizing service configuration and making up for the implementation of adaptive service configuration for different device service types in the IPv6 network environment.

The embodiment of the present application provides the method for adaptive service configuration based on different service requirements in the IPv6 network environment, aiming at the problem that services cannot be intelligently and securely configured according to the different service requirements of devices connected to a home gateway in the IPv6 network environment. This method is applicable to IPv6 network devices.

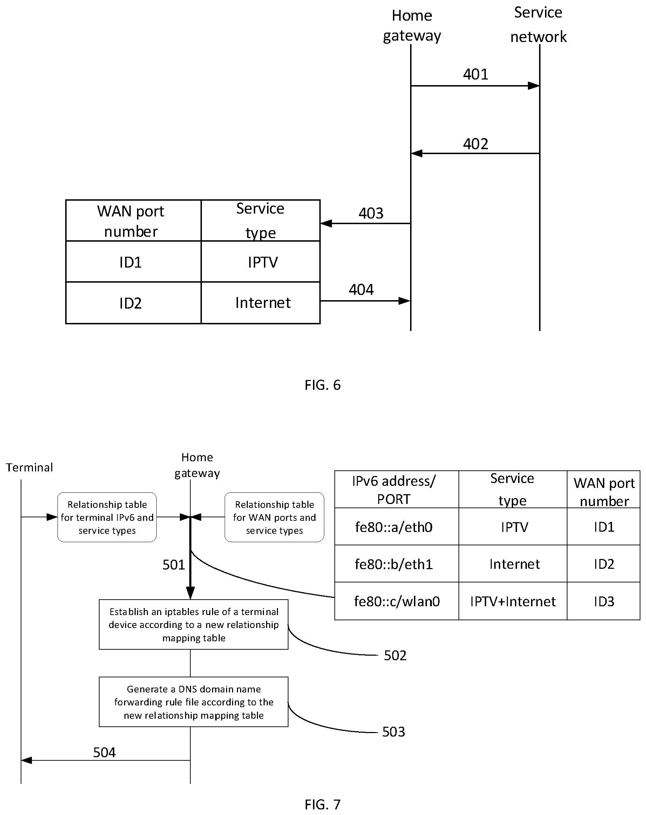

To help understand the technical principle of the embodiment of the present application, a specific embodiment of the service configuration method for the IPv6 network is listed. Referring to FIG. 6, FIG. 6 is a schematic flowchart of a WAN port control module in an embodiment of the present application. The following specific implementation steps are illustrated in combination with FIG. 6.

Step 401: a home gateway device initiates WAN connection, and requests an IPv6 global unique address and/or a proxy prefix, and only with the proxy prefix can a corresponding IPv6 address be allocated to an accessed terminal device.

Step 402: a service network replies to the gateway according to the request, the interaction of WAN connection with the IPv6 address ends, and relevant information such as a global unique address of the corresponding service network, an IPv6 DNS Server and a prefix is obtained.

Step 403: the WAN port control module generates a relationship table for the WAN connection ID and its service type; and both online and offline states of the WAN connection are notified to this control module, so as to update and maintain the relationship table. Through the WAN port number, corresponding routing rules, domain name information, and IPv6 GUAs, etc., can be found.

Step 404: the WAN port control module notifies a service configuration control module of configuration information corresponding to its WAN connection, and waits for the control by the service configuration control module.

It is to be noted that the above specific embodiment is only used to help understand the technical conception of the embodiment of the present application and does not constitute a limitation on the present application. Simple transformations in more forms based on this technical conception shall all fall within the scope of protection of the present application.

In some embodiments, the method further includes: step J10, dynamically detecting a connectivity status of the terminal device, wherein the connectivity status includes an online state and an offline state; and step J20, dynamically maintaining the third mapping relationship according to the dynamically detected connectivity status.

In this embodiment, specifically, when the connectivity status of the terminal device is the offline state, relevant information of the terminal device is deleted from the third mapping relationship or disabled, whereas when the connectivity status of the terminal device is the online state, the relevant information of the terminal device is restored from the third mapping relationship or enabled.

In this embodiment, the connectivity status of the terminal device is dynamically detected (wherein the connectivity status includes the online state and the offline state), and the third mapping relationship is dynamically maintained according to the dynamically detected connectivity status. Therefore, the network security and service reliability of service implementation for terminal devices with different service types or multiple service type requirements in the IPv6 network environment are ensured.

In some embodiments, the method further includes: step K10, dynamically detecting a communication status of the target WAN port, wherein the communication status includes a connected state and a disconnected state; and step K20, dynamically maintaining the third mapping relationship according to the dynamically detected communication status.

In this embodiment, specifically, when the communication status of the target WAN port is the disconnected state, relevant information of the target WAN port is deleted from the third mapping relationship or disabled, whereas when the communication status of the target WAN port is the connected state, the relevant information of the target WAN port is restored from the third mapping relationship or enabled.

In this embodiment, the communication status of the target WAN port is dynamically detected (wherein the communication status includes the connected state and the disconnected state), and the third mapping relationship is dynamically maintained according to the dynamically detected communication status. Therefore, the network security and service reliability of service implementation for terminal devices with different service types or multiple service type requirements in the IPv6 network environment are further ensured.

Further, after the step of forwarding the service message to the service network corresponding to the target WAN port, the method further includes: step L10, receiving a service response message returned by the service network in response to the service message; and step L20, forwarding the service response message to the terminal device.

In this embodiment, by receiving the service response message returned by the service network in response to the service message and forwarding the service response message to the terminal device, service response to the terminal device is realized. It ensures the network security and service reliability of service implementation for terminal devices with different service types or multiple service type requirements in the IPv6 network environment.

To help understand the technical principle of the embodiment of the present application, a specific embodiment of the service configuration method for the IPv6 network is listed. Referring to FIG. 5, FIG. 5 is a schematic flowchart of a terminal identification module in an embodiment of the present application. Taking a stateful address acquisition method of the terminal device as an example, an IPv6 address (global unique address) is acquired via DHCPv6. The following specific implementation steps are illustrated in combination with FIG. 5.

Step 301: a terminal device initiates DHCPv6 interaction to acquire the IPv6 address, sends a DHCPv6 solicit message carrying Option16 information to a home gateway, and requests a global unique address and/or a proxy prefix. As shown in FIG. 5, Vendor Class is the hexadecimal representation of the specific Option16 message. By converting the hexadecimal value "49 50 54 56" of Value into a corresponding character string "IPTV" via parsing, a service type of the terminal device is identified. This Option value is generally agreed with the vendor.

When the terminal device acquires a stateless address through RS message interaction, an RS Option field in an RS message may carry a service type identification flag agreed with the vendor, that is, service identification is performed by parsing the hexadecimal value following Reserved field in the RS message.

Step 302: the terminal identification module parses the service requirement flag carried in Option16 and parses out the service type required by the terminal device. For example, if an identification is "IPTV", it indicates that the terminal device is possibly an STB device and needs to access service networks related to IPTV; and if the flag is "IPTV+Internet", it indicates that the terminal device is a smart device with requirements for both IPTV and Internet access services.

The terminal identification module records an IPv6 link-local address of the terminal device and generates a new relationship table. The IPv6 link-local address here may also be a LAN-side port number through which the terminal device accesses.

Step 303: the relationship table generated in step 302 is sent to a service configuration control module.

Step 304: the service configuration control module searches for WAN port information of a corresponding service and replies to the terminal device with an Advertise message, which carries the requested IPv6 global unique address (GUA) and/or the proxy prefix. Both the proxy prefix and the GUA are acquired or generated by searching the WAN port information of the corresponding service.

The above specific embodiment is only used to help understand the technical conception of the embodiment of the present application and does not constitute a limitation on the present application. Simple transformations in more forms based on this technical conception shall all fall within the scope of protection of the present application.

To help understand the technical conception of the embodiment of the present application, a specific embodiment of the service configuration method for the IPv6 network is listed. Referring to FIG. 7, FIG. 7 is a schematic flowchart of a service configuration control module in an embodiment of the present application. The following specific implementation steps are illustrated in combination with FIG. 7.

Step 501: the service configuration control module generates a new relationship mapping table according to the relationship tables from step 303 and step 403, making a LAN-side terminal device corresponding to a WAN port connection.

Step 502: according to the new relationship mapping table generated in step 501, the service configuration control module establishes a firewall rule chain between an IPv6 global unique address (GUA) requested by the terminal device and a mark value of a WAN port of a corresponding service. Messages with the matched rule chain can then normally go out through the WAN port of the corresponding service, making it more secure and reliable.

Step 503: according to the new relationship mapping table generated in step 501, a DNS module queries IPv6 DNS Server information corresponding to the corresponding WAN port, and generates a DNS domain name forwarding rule file from the IPv6 DNS Server information and an IPv6 link-local address of the terminal device, ensuring that IPv6 domain name query messages of the terminal go out through a specific service channel.

Step 504: service configuration ends, and at the same time, the global unique address or the proxy prefix requested by the terminal device is replied to the terminal device.

It is to be noted that the above specific embodiment is only used to help understand the technical conception of the embodiment of the present application and does not constitute a limitation on the present application. Simple transformations in more forms based on this technical conception shall all fall within the scope of protection of the present application.

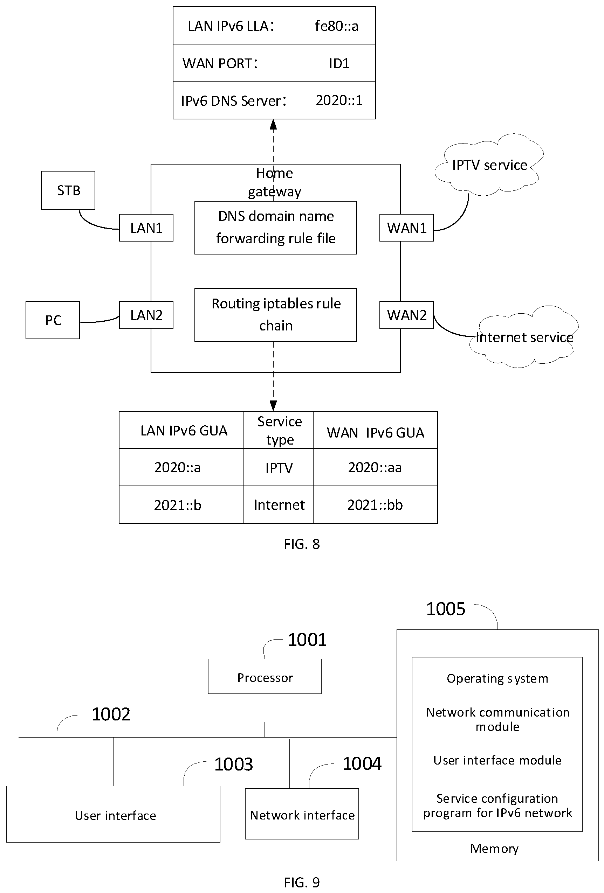

To further help understand the technical conception of the embodiment of the present application, a specific embodiment of the service configuration method for the IPv6 network is listed. Referring to FIG. 8, FIG. 8 is a schematic diagram of service control forwarding in an embodiment of the present application. The following specific implementation steps are illustrated in combination with FIG. 8.

If the terminal device is an STB device, and the STB device is about to access a domain name belonging to and related to an IPTV service, a query message is forwarded to a home gateway (an instance of an access network device). Since an original IPv6 link-local address (LLA) of the terminal device has already been bound in the DNS domain name forwarding rule file, an IPv6 DNS Server address of the corresponding WAN port can be easily found and then the message is forwarded out. Here, it is also possible to newly configure a specific domain name query relationship into the domain name forwarding rule file, for example, a domain name prefix matching rule is added. When a domain name prefix queried by the terminal device is not in the pre-configured DNS domain name forwarding rule file, the domain name prefix goes out from an IPv6 DNS Server address of a default WAN port, and if it is, the domain name prefix goes out from an IPv6 DNS Server address of a designated WAN port.

If a data message of the STB device needs to go to a designated service, the IPv6 global unique address (GUA) of the terminal device is used to match a routing iptables rule chain, and a mark value of the rule chain corresponding to the terminal device is found. The mark value here is acquired from the query of the WAN port of the corresponding service in the WAN port control module. Then, the GUA on the WAN port is found, a mapping rule is formed between the GUA of the LAN port terminal and the GUA of the WAN port, and the corresponding service message is forwarded out.

The above uses the IPv6 address of the terminal device for service binding. Alternatively, we can also record a LAN-side port number of the terminal device, and identify a type of the terminal device under this port through the terminal identification module. The LAN-side port of the terminal is bound to the WAN connection of the corresponding service, i.e., port binding, so that all services on this port can go out from the specific WAN connection.

It is to be noted that what is disclosed above is only a preferred embodiment of the present application, and certainly, it should not be taken as limiting the scope of protection of the present application. A person of ordinary skills in the art can understand that all or part of the processes for implementing the above embodiments, and equivalent changes made according to the claims of the present invention, still fall within the scope covered by the present application.

That is to say, the above specific embodiment is only used to help understand the technical conception of the embodiment of the present application and does not constitute a limitation on the present application. Simple transformations in more forms based on this technical conception shall all fall within the scope of protection of the present application.

In addition, an embodiment of the present application further provides an electronic device. The electronic device may be, for example, an edge router, or may also be a broadband remote access server (BRAS), a broadband network gateway, a serving GPRS support node (SGSN), a gateway GPRS support node (GGSN), a mobility management entity (MME), or a serving gateway (S-GW), etc.

Referring to FIG. 9, FIG. 9 is a schematic diagram of a hardware structure of an electronic device provided by an embodiment of the present application. As shown in FIG. 9, the electronic device may include: a processor 1001, such as a central processing unit (CPU), a communication bus 1002, a user interface 1003, a network interface 1004, and a memory 1005. The communication bus 1002 is configured to realize connection and communication between these components. The user interface 1003 may include a display, and an input unit such as a keyboard. Optionally, the user interface 1003 may further include a standard wired interface and a wireless interface. The network interface 1004 may optionally include a standard wired interface and a wireless interface (such as a wireless fidelity (WI-FI) interface). The memory 1005 may be a high-speed random access memory (RAM), or a stable non-volatile memory (NVM), such as a disk memory. The memory 1005 may further optionally be a storage device independent from the aforementioned processor 1001.

A person skilled in the art can understand that, the structure shown in FIG. 9 does not constitute a limitation to the electronic device, and may include more components or fewer components than those shown in the figure, or a combination of some components, or different component arrangements. As shown in FIG. 9, the memory 1005 serving as a storage medium may include an operating system, a data storage module, a network communication module, a user interface module, and a service configuration program for an IPv6 network.

In the electronic device shown in FIG. 9, the network interface 1004 is mainly used for data communication with other devices; and the user interface 1003 is mainly used for data interaction with a user. The processor 1001 and the memory 1005 in this embodiment may be arranged in a communication device, and the communication device calls, through the processor 1001, the service configuration program for the IPv6 network stored in the memory 1005, and performs the service configuration method applied to the IPv6 network provided by any of the above embodiments.

The terminal provided by this embodiment and the service configuration method applied to the IPv6 network provided by the above embodiment belong to the same inventive idea. Technical details not described in detail in this embodiment can be found in any of the above embodiments, and this embodiment has the same beneficial effects as obtained by performing the service configuration method for the IPv6 network.

In addition, an embodiment of the present application further provides a storage medium. The storage medium is a computer storage medium. The computer-readable storage medium may be a non-volatile computer-readable storage medium. The computer-readable storage medium stores a service configuration program for the IPv6 network thereon, and the service configuration program for the IPv6 network, when executed by a processor, implements the above-mentioned service configuration method for the IPv6 network in the present application.

Various embodiments of the electronic device and the computer-readable storage medium in the present application may all refer to various embodiments of the service configuration method for the IPv6 network in the present application, which are omitted here.

It is to be noted that, the terms "include," "comprise" or any other variants thereof herein are intended to cover non-exclusive inclusion, so that a process, method, article or system including a series of elements not only includes those elements, but also includes other elements not clearly listed, or further includes elements inherent to such process, method, article or system. Without further restrictions, the elements defined by the sentence "including a..." do not exclude that there are other same elements in the process, method, article or system including the elements.

The sequence numbers of the foregoing embodiments of the present application are merely for the description purpose but do not imply the preference among the embodiments.

Through the description of the above implementations, those skilled in the art can clearly understand that the method in the above embodiments can be implemented through software and necessary general hardware platforms. Certainly, the method may also be implemented through hardware, but in many cases, the former is the better implementation. Based on such understandings, the technical solution of the present application can be embodied in the form of a software product essentially or on the part of contributions to the prior art. The computer software product is stored in one storage medium (such as a ROM/RAM, a magnetic disk and an optical disk) as described above, and includes a plurality of instructions used to enable an electronic device (it may be a mobile phone, a computer, a server, an air conditioner or a network device, etc.) to perform the methods described in various embodiments of the present application.

The above is only preferred embodiments of the present application and is not intended to limit the patent scope of the present application. Any equivalent structural or equivalent process transformations made using the contents of the specification and the accompanying drawings of the present application, or any direct or indirect application in other related technical fields, shall all likewise be included within the patent protection scope of the present application.

## Claims

1. A service configuration method for an IPv6 network, comprising:
receiving an IPv6 address request message from a terminal device, wherein the IPv6 address request message comprises service type information;
determining, according to the service type information, WAN connection information corresponding to the service type information, and acquiring target IPv6 address information;
establishing a first mapping relationship between the target IPv6 address information and the WAN connection information, and sending the target IPv6 address information to the terminal device; and
determining, after receiving a service message carrying the target IPv6 address information returned by the terminal device, the WAN connection information mapped by the target IPv6 address information according to the first mapping relationship for forwarding the service message.

2. The service configuration method for the IPv6 network according to claim 1, wherein the WAN connection information comprises an identification value of a target WAN port corresponding to the service type information, and determining the WAN connection information mapped by the target IPv6 address information for forwarding the service message comprises the following steps:
generating a destination forwarding route entry according to the identification value of the target WAN port mapped by the target IPv6 address information; and
forwarding the service message to a target GUA corresponding to the target WAN port through the destination forwarding route entry.

3. The service configuration method for the IPv6 network according to claim 1, wherein the method further comprises:
dynamically detecting a connectivity status of the terminal device, wherein the connectivity status comprises an online state and an offline state; and
dynamically maintaining the first mapping relationship according to the dynamically detected connectivity status.

4. The service configuration method for the IPv6 network according to claim 2, wherein the method further comprises:
dynamically detecting a communication status of the target WAN port, wherein the communication status comprises a connected state and a disconnected state; and
dynamically maintaining the first mapping relationship according to the dynamically detected communication status.

5. The service configuration method for the IPv6 network according to claim 1, wherein the method further comprises:
determining a link-local address of the terminal device according to the IPv6 address request message;
establishing a second mapping relationship between the link-local address and the WAN connection information;
determining, after receiving a service message carrying the link-local address returned by the terminal device, the WAN connection information mapped by the link-local address according to the second mapping relationship; and
forwarding the service message based on the WAN connection information mapped by the link-local address.

6. The service configuration method for the IPv6 network according to claim 5, wherein the WAN connection information comprises IPv6 DNS server information of a target WAN port corresponding to the service type information, and forwarding the service message based on the WAN connection information mapped by the link-local address comprises the following steps:
generating a destination domain name forwarding rule according to the IPv6 DNS server information of the target WAN port mapped by the target IPv6 address information; and
forwarding the service message to a target GUA corresponding to the target WAN port through the destination domain name forwarding rule.

7. The service configuration method for the IPv6 network according to claim 5, wherein the method further comprises:
dynamically detecting a connectivity status of the terminal device, wherein the connectivity status comprises an online state and an offline state; and
dynamically maintaining the second mapping relationship according to the dynamically detected connectivity status.

8. The service configuration method for the IPv6 network according to claim 6, wherein the method further comprises:
dynamically detecting a communication status of the target WAN port, wherein the communication status comprises a connected state and a disconnected state; and
dynamically maintaining the second mapping relationship according to the dynamically detected communication status.

9. The service configuration method for the IPv6 network according to claim 1, wherein the method further comprises:
determining a LAN-side port number accessed by the terminal device according to the IPv6 address request message;
establishing a third mapping relationship between the LAN-side port number and the WAN connection information;
determining, after receiving a service message sent by the terminal device based on the LAN-side port number, the WAN connection information mapped by the LAN-side port number according to the third mapping relationship; and
forwarding the service message based on the WAN connection information mapped by the LAN-side port number.

10. The service configuration method for the IPv6 network according to claim 9, wherein the WAN connection information comprises a port number of a target WAN port corresponding to the service type information, and forwarding the service message based on the WAN connection information mapped by the LAN-side port number comprises the following step:
forwarding the service message to a service network corresponding to the target WAN port according to the port number of the target WAN port mapped by the LAN-side port number.

11. The service configuration method for the IPv6 network according to claim 9, wherein the method further comprises:
dynamically detecting a connectivity status of the terminal device, wherein the connectivity status comprises an online state and an offline state; and
dynamically maintaining the third mapping relationship according to the dynamically detected connectivity status.

12. The service configuration method for the IPv6 network according to claim 10, wherein after the step of forwarding the service message to the service network corresponding to the target WAN port, the method further comprises:
receiving a service response message returned by the service network in response to the service message; and
forwarding the service response message to the terminal device.

13. The service configuration method for the IPv6 network according to any one of claims 1 to 12, wherein the target IPv6 address information is a target IPv6 proxy prefix or an IPv6 global unicast address (GUA) generated based on the target IPv6 proxy prefix.

14. An electronic device, comprising: a memory, a processor and a service configuration program for an IPv6 network stored on the memory and capable of running on the processor, wherein the service configuration program for the IPv6 network, when executed by the processor, implements the service configuration method for the IPv6 network according to any one of claims 1 to 13.

15. A readable storage medium, being a computer-readable storage medium, wherein the computer-readable storage medium stores a service configuration program for an IPv6 network thereon, and the service configuration program for the IPv6 network, when executed by a processor, implements the service configuration method for the IPv6 network according to any one of claims 1 to 13.
